Europäisches Patentamt

European Patent Office

Office européen des brevets

(19)

(11) Numéro de publication: **0 001 544**
A1

(12) **DEMANDE DE BREVET EUROPEEN**

(21) Numéro de dépôt: 78930003.5

(22) Date de dépôt: 21.09.78

(51) Int. Cl.²: **E 06 B 3/26, E 06 B 1/28,** **E 06 B 1/32, B 60 P 3/32**

(30) Priorité: 30.09.77 FR 7729441

(71) Demandeur: **Société dite: PARA-PRESS S.A., Boîte postale 15, Bettembourg (LU)**

(43) Date de publication de la demande: 18.04.79 Bulletin 79/8

(72) Inventeur: **Baulisch, Ralph, ing. dipl., 427 route de Longwy, Luxembourg (LU)**

(74) Mandataire: **Meyers, Ernest, OFFICE DES BREVETS FREYLINGER & ASSOCIES Boîte postale 1153 19-21 Boulevard Joseph II, Luxembourg (LU)**

(84) Etats contractants désignés: BE CH DE FR GB LU SE

(54) **Châssis pour fenêtres ou portes de caravanes.**

(57) Le châssis est constitué par un élément creux (16) pourvu de canaux intérieurs (18, 20).

Afin d'assurer une bonne isolation thermique et d'être, en même temps, suffisamment rigide, l'élément creux (16) est en matière plastique et au moins un (20) des canaux intérieurs contient une armature de renforcement (22), par exemple, en bois.

EP 0 001 544 A1

M E M O I R E   D E S C R I P T I F

déposé à l'appui d'une demande de

B R E V E T   D ' I N V E N T I O N

(sous le bénéfice de la
Convention Internationale de Paris) formée par PARA-PRESS S.A.
BETTEMBOURG
(Grand-Duché de Luxembourg) pour " Châssis pour fenêtres ou portes
de caravanes "

La présente invention concerne un châssis pour une fenêtre ou une porte d'une caravane et constitué par un élément creux, profilé, pourvu de canaux intérieurs.

De tels châssis sont connus et ont, jusqu'à présent, été réalisés généralement en aluminium. Toutefois, l'aluminium étant, comme la plupart des métaux, un bon conducteur, les châssis en aluminium présentent un inconvénient du point de vue isolation thermique, ceci surtout lorsqu'ils sont prévus pour les habitacles à volume réduit, comme par exemple, les caravanes. Ces propriétés de l'aluminium entraînent non seulement une perte de chaleur par conduction, mais également et surtout des condensations sur la partie intérieure du châssis. Le fait d'utiliser pour le châssis en aluminium un élément creux et profilé sert avant tout à réduire son poids, mais ne permet pas une réduction sensible de ces inconvénients.

L'aluminium possède en outre l'inconvénient qu'il nécessite un traitement anti-corrosif préalable.

Les matières synthétiques, comme par exemple, le plastique, ne présentent pas ces inconvénients inhérents à la conductibilité thermique, mais ces matières n'ont pu être utilisées jusqu'à maintenant, étant donné qu'elles ne présentent pas la rigidité nécessaire, compte tenu des dimensions impliquées, ceci surtout pour les fenêtres ouvrantes et les portes.

La présente invention s'est fixée comme but de prévoir un châssis du genre décrit dans le préambule, qui présente à la fois les avantages de l'aluminium et ceux des matières synthétiques, sans pour autant souffrir de leurs inconvénients.

A cet effet, le châssis objet de l'invention est essentiellement caractérisé en ce que l'élément creux profilé est en matière plastique et en ce qu'au moins un des canaux intérieurs contient une armature de renforcement.

La section de cette armature est avantageusement rectangulaire ou carrée et sa matière est avantageusement du bois, comme par exemple, du bois de sapin.

Les sections droites de l'élément creux profilé peuvent être réalisées par un procédé d'extrusion et l'armature est, de préférence, introduite dans cet élément après son extrusion.

La découpe dans laquelle est placé le châssis est, pour des raisons de facilité de fabrication , rectangulaire et les coins du châssis sont, par conséquent, à la surface périphérique, à angles droits. Toutefois, les bords adjacents au verre sont, de préférence, arrondis afin de pouvoir, pour des raisons de sécurité, dans le cas de fenêtres ouvrantes, arrondir les coins de ces dernières. Les coins du châssis ont donc une forme approximativement triangulaire, à hypoténuse concave, et doivent de ce fait être fabriqués séparément par des procédés d'injections. La jonction entre les sections droites et les coins du châssis est réalisée par collage ou soudage.

L'armature des sections droites du châssis pénètre toutefois jusque dans les éléments des coins et c'est la raison pour laquelle il est préférable d'introduire l'armature dans l'élément profilé en plastique après son procédé d'extrusion, plutôt que d'extruder le plastique sur l'armature.

Le bois a l'avantage de conférer la rigidité nécessaire au châssis, tout en constituant une barrière thermique qui réduit, ou du moins diminue sensiblement, les inconvénients présentés par l'aluminium .

La fixation d'un tel châssis dans la découpe prévue à cet effet dans une caravane ou autre habitacle, peut se faire moyennant des plaquettes sur la partie intérieure du châssis. Ces plaquettes peuvent être constituées par les lamelles pourvues de crochets et livrables avec le châssis. Une garniture peut être prévue du côté intérieur pour masquer ces fixations.

La fixation peut également être effectuée par des vis introduites à travers le plastique et l'armature en bois dans la paroi de la caravane. Un tel châssis présente, outre les avantages mentionnés ci-dessus, celui de ne pas nécessiter des trous forés préalablement dans l'aluminium en vue de sa fixation, les vis pouvant être enfoncées sur place à travers la matière plastique et l'armature en bois.

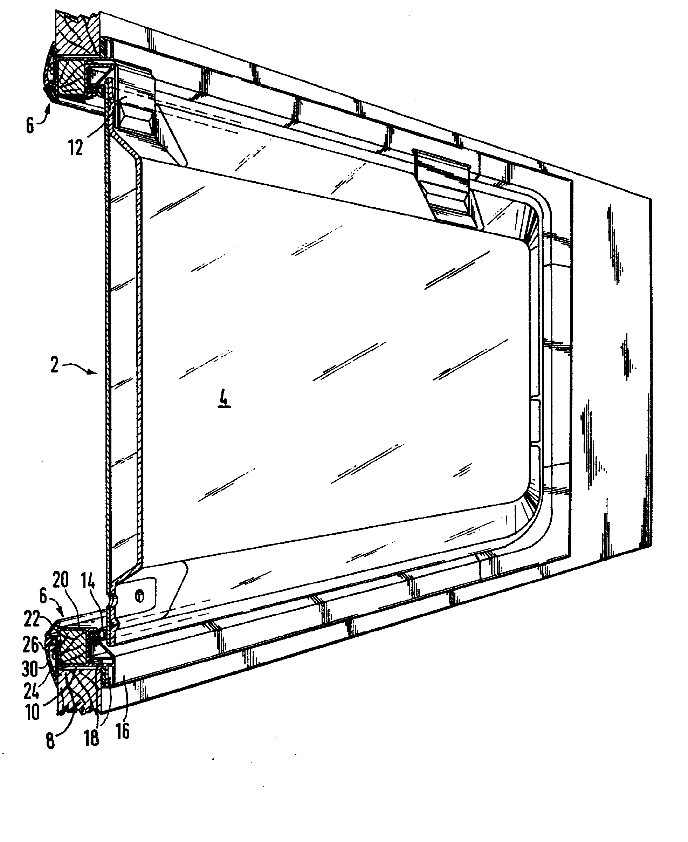

D'autres détails et particularités ressortiront à la lecture de la description détaillée d'un mode de réalisation donné ci-dessous, à titre d'exemple, en référence à la figure unique qui présente une vue partiellement en coupe et en perspective d'une fenêtre de caravane munie d'un châssis selon la présente invention.

La fenêtre est désignée globalement par la référence 2 et comporte une vitre ouvrable 4 à double panneaux et un châssis représenté par 6, qui est monté dans une découpe 10 prévue à cet effet dans une paroi 8 d'une caravane. La vitre 4 est montée au moyen de deux ou plusieurs charnières 12, connues en soi, sur le châssis, et l'isolation entre la vitre 4 et le châssis peut être assurée au moyen d'un joint en caoutchouc 14, connu en soi, et monté sur le châssis 6.

Ce châssis 6 est constitué par un élément profilé 16, présentant une série de canaux intérieurs 18. Ainsi que le montre la figure, les faces des coins de ce cadre 6, qui se trouvent du côté de la vitre 4, sont, de préférence, arrondis afin d'éviter, dans un but de sécurité, de devoir prévoir des coins à angles droits, donc saillants et dangereux pour la vitre 4.

Selon la présente invention, l'élément profilé 16 est en matière plastique et au moins un des canaux intérieurs, en l'occurence le canal 20, contient une armature 22, de préférence en bois.

En vue du montage, le cadre 6 peut être livré avec des lamelles 24, munies de crochets et disposées parallèlement à l'élément en plastique 16. Après l'introduction du châssis 6 dans la découpe 10, ces éléments 24 peuvent être pivotés de 90° et assurer, après le serrage des vis 26, une fixation solide entre la paroi 8 et le châssis 6. Ces éléments de fixation 24 et 26 peuvent être recouverts par une garniture appropriée.

Il va sans dire que la description ci-dessus s'applique aussi bien à des fenêtres ouvrantes qu'à des fenêtres non-ouvrantes, ou encore des portes, le verre des vitres pouvant être du verre simple, à base de silicate, ou du verre acrylique simple ou double.

-5-　　　　　0001544

Il est également possible de remplacer le bois de l'armature par d'autres matières appropriées pourvu que celles - ci présentent les propriétés requises de rigidité et d'isolation.

REVENDICATIONS
========================================

1. Châssis pour une fenêtre ou une porte d'une caravane et constitué par un élément creux, profilé, pourvu de canaux intérieurs, caractérisé en ce que l'élément creux profilé est en matière plastique et en ce qu'au moins un des canaux intérieurs contient une armature de renforcement.

2. Châssis selon la revendication 1, caractérisé en ce que la matière de l'armature est du bois.

3. Châssis selon l'une des revendications 1 ou 2, caractérisé en ce que la section de l'armature est rectangulaire.

4. Châssis selon l'une des revendications 1 ou 2, caractérisé en ce que la section de l'armature est carrée.

5. Châssis selon la revendication 1, caractérisé en ce qu'il est formé par des éléments droits et des éléments de coin de forme triangulaire à hypoténuse concave, réunis par collage ou soudage.

6. Châssis selon la revendication 1, caractérisé en ce que les éléments droits en matière plastique sont fabriqués suivant un procédé d'extrusion et en ce que l'armature est introduite dans ceux-ci après le procédé d'extrusion.

## DOCUMENTS CONSIDERES COMME PERTINENTS

| Catégorie | Citation du document avec indication, en cas de besoin, des parties pertinentes | Revendica-tion concernée |
|---|---|---|
| X | <u>FR - A - 1 576 283</u> (P.H. JAMES)<br><br>* Figures 1 et 3; résumé; page 3, lignes 30-41 *<br><br>-- | 1-3,4, 6 |
| X | <u>FR - A - 1 569 343</u> (HALBERTSMA)<br><br>* Figures 1-5; résumé; page 3, lignes 19-33 *<br><br>-- | 1-3,6 |
| X | <u>DE - A - 2 121 911</u> (STEMMER)<br><br>* Figure 5, revendications 1 et 2 *<br><br>-- | 1-3 |
| X | <u>NL - A - 77 03198</u> (DYNAMIT NOBEL)<br><br>* Figures 1-3, revendications 1-8; page 3, ligne 31 - page 4, ligne 35 *<br><br>& FR - A - 2 345 278<br><br>-- | 1,3,4, 6 |
| X | <u>FR - A - 2 090 610</u> (C. SCHNICKS)<br><br>* Figures 1 et 2; revendication 1; page 4, lignes 22-29 *<br><br>-- | 1,3,4, 6 |
| X | <u>FR - A - 2 076 888</u> (HOECHST)<br><br>* Figures 1-4; revendications 1-11 *<br><br>-- | 1,3,5, 6 |
| X | <u>FR - A - 2 039 350</u> (DYNAMIT NOBEL)<br><br>* Revendications 1-4; figures 1 et 2; page 4, ligne 18 - page 6, ligne 3 * -- ./. | 1,3,4 |

**CLASSEMENT DE LA DEMANDE (Int. Cl.²)**

E 06 B 3/26
　　　　1/28
　　　　1/32
B 60 P 3/32

**DOMAINES TECHNIQUES RECHERCHES (Int. Cl.²)**

E 06 B 3/26
　　　　1/28
　　　　1/32
E 06 B 3/06
B 60 P 3/32

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 18-12-1978 | DELANGHE |

OEB Form 1503.1  06.78

| Catégorie | Citation du document avec indication, en cas de besoin, des parties pertinentes | Revendication concernée |
|---|---|---|
| | **DOCUMENTS CONSIDERES COMME PERTINENTS** | |
| X | FR - A - 2 273 931 (SOC. AN. ISOBELEC)<br><br>* Figures 1 et 2; page 2, lignes 12-19; revendications 1 et 2 *<br><br>-- | 1,3,6 |
| X | FR - A - 2 268 444 (KOMAREK)<br><br>* Revendication 1, figures; page 2, lignes 2-37 *<br><br>-- | 1,3,6 |
| X | DE - A - 2 401 155 (G. VOLZ)<br><br>* Revendication 1; figure 1; page 4, ligne 24 - page 5, ligne 17 *<br><br>-- | 1,3,6 |
| X | FR - A - 1 542 949 (M.H.W. PETERS)<br><br>* Figures 1-3; résumé; page 2, colonne de droite, lignes 19-49 *<br><br>-- | 1,3,6 |
| PX | DE - A - 2 704 808 (ETABLISSEMENT AUGURA)<br><br>* Revendication 1; figures 1 et 2; page 7, ligne 16 - page 9, ligne 6 *<br><br>---- | 1,3 |

**CLASSEMENT DE LA DEMANDE (Int. Cl.²)**

**DOMAINES TECHNIQUES RECHERCHES (Int. Cl.²)**